# EUROPEAN PATENT SPECIFICATION

(11) **EP 4 267 869 B1**
(45) Date of publication and mention of the grant of the patent: **14.10.2026**
(21) Application number: 21916353.2
(22) Date of filing: 28.12.2021
(51) Int. Cl.: F16G 1/28, F16G 3/00, F16G 1/00, F16G 1/04, F16G 1/06, F16G 5/00, B29D 29/00

(54) **DRIVE BELTS INCLUDING FOAMED UNDERCORD LAYERS AND METHODS OF MANUFACTURING THE SAME**
ANTRIEBSRIEMEN MIT GESCHÄUMTEN UNTERKORDSCHICHTEN UND VERFAHREN ZUR HERSTELLUNG DAVON
COURROIES DE TRANSMISSION COMPRENANT DES COUCHES DE SOUS-CÂBLE EN MOUSSE ET LEURS PROCÉDÉS DE FABRICATION

(30) Priority: 28.12.2020 US 202063131211 P
(43) Date of publication of application: 01.11.2023
(73) Proprietor: Gates Corporation, Denver, CO 80202 (US)
(72) Inventor: CHEONG, Tae Hee, Troy, Michigan 48085 (US); OCHOA, Charles F., Columbia, Missouri 65201 (US); GERRING, Douglas G., Denver, Colorado 80202 (US); SPRING, Kyle, Denver, Colorado 80202 (US)
(74) Representative: Carpmaels & Ransford LLP
(86) International application number: PCT/US2021/065317
(87) International publication number: WO 2022/146989

(56) References cited:
- WO-A1-2016/170788
- WO-A1-2019/072956
- DE-B4- 102017 123 722
- US-A1- 2004 204 275
- US-A1- 2013 153 123
- US-B2- 10 323 717
- US-B2- 7 988 577

## Description

### TECHNICAL FIELD

The present application relates to belts for use in, for example, automobile power transmissions, and more specifically, belts having improved efficiency in terms of reduced energy required to turn the belt as compared to previously known belts. The belts described herein incorporate foamed or partially foamed undercord layers in order to reduce the bending stiffness of the belts and thereby improve the energy efficiency of the belt. The improved bending stiffness exhibited by belts including foamed or partially foamed undercord layers as described herein is accomplished without sacrificing other performance characteristics of the belt, such as durability and power transmission capability.

### BACKGROUND

Previously known belts used in, for example, automobile power transmissions, require a certain amount of energy in order to turn the belt. The energy consumption is typically in the form of hysteretic heat generation and additional fuel consumption from increased torque to turn the belt. Belts requiring lower amounts of energy to turn the belt are desirable for a variety of reasons. For example, a belt requiring less energy to turn results in improved fuel economy and reduced emissions, both of which are highly valued in vehicle design.

The energy efficiency of a belt (i.e., the amount of energy required to turn a belt) depends on numerous different characteristics of the belt, including, but not limited to, the materials used in the belt, the mass of the belt, the thickness of the belt, and the bending stiffness of the belt. In the case of bending stiffness, various aspects of a belt can be altered in order to decrease bending stiffness and thereby decrease the energy consumption required to turn the belt. However, changes made to a belt in order to decrease bending stiffness must be considered in conjunction with how the changes may negatively impact other characteristics of the belt, such as durability. As such, a need exists for belts that require less energy to turn the belt while also not degrading other important characteristics of the belt, such as those relating to performance and durability. A need also exists for methods of manufacturing such belts.

DE 10 2017 123 722 B4 discloses a force transmission belt with a main part that has a multilayer design with at least three layers, each of which consists of an elastomer or thermoplastic material. At least one of the layers within the main part is a foamed layer, wherein the foamed layer or each foamed layer lies on the inside with respect to the sequence of layers in the main part. US 10323717 B2 discloses a friction transmission belt including a rubber layer forming a pulley contact surface, the rubber layer includes a rubber composition containing hydrophilic inorganic filler and a sliding-resistant material. The sliding-resistant material protrudes from the pulley contact surface, and is at least one of hydrophobic resin particles and hydrophobic resin fibers.

### SUMMARY

The present invention provides a drive belt as recited in claim 1. Optional features are recited in the dependent claims. The present invention also provides a method of manufacturing a drive belt as recited in claim 12. Optional features are recited in the dependent claims. This Summary, and the foregoing Background, is not intended to identify key aspects or essential aspects of the claimed subject matter. Moreover, this Summary is not intended for use as an aid in determining the scope of the claimed subject matter.

The drive belt of the present invention has reduced bending stiffness to thereby improve energy efficiency.

These and other aspects of the high efficiency belt described herein will be apparent after consideration of the Detailed Description and Figures herein. It is to be understood, however, that the scope of the claimed subject matter shall be determined by the claims as issued and not by whether given subject matter addresses any or all issues noted in the Background or includes any features or aspects recited in the Summary.

### BRIEF DESCRIPTION OF THE DRAWINGS

Non-limiting and non-exhaustive embodiments of the disclosed high efficiency belt, including the preferred embodiment, are described with reference to the following figures, wherein like reference numerals refer to like parts throughout the various views unless otherwise specified.
FIG. 1 is a simplified cross sectional view of a drive belt in accordance with various embodiments described herein.
FIG. 2 is a simplified cross sectional view of a drive belt in accordance with various embodiments described herein.
FIG. 3 is a simplified cross sectional view of a drive belt in accordance with various embodiments described herein.
FIG. 4A and FIG. 4B are a Keyence microscope image and SEM image, respectively, of a cross-section of a drive belt in accordance with various embodiments described herein.
FIG. 5A and 5B are perspective view of drive belts in accordance with various embodiments described herein.
FIG. 6 is a flow chart illustrating a method for manufacturing a drive belt in accordance with various embodiments described herein.
FIG. 7 is a flow chart illustrating a method for manufacturing a drive belt in accordance with various embodiments described herein.

### DETAILED DESCRIPTION

Embodiments are described more fully below with reference to the accompanying Figures, which form a part hereof and show, by way of illustration, specific exemplary embodiments. These embodiments are disclosed in sufficient detail to enable those skilled in the art to practice the invention. However, embodiments may be implemented in many different forms and should not be construed as being limited to the embodiments set forth herein. The following detailed description is, therefore, not to be taken in a limiting sense.

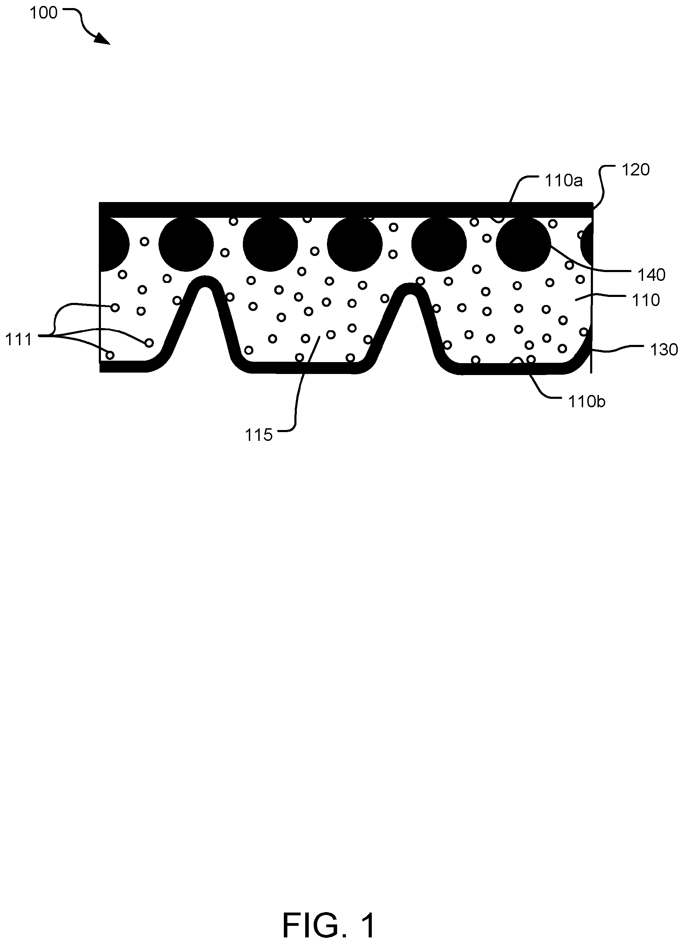

With respect to FIG. 1, a cross-sectional view of a drive belt 100 including a foamed undercord layer 110 in accordance with various embodiments of the drive belt described herein is shown. The foamed undercord layer 110 has a backing layer surface 110a and an exterior surface 110b opposite the backing layer surface 110a, with the thickness of undercord layer 110 being the distance between the backing layer surface 110a and the exterior surface 110b. The thickness of the undercord layer 110 is generally not limited, and may be adjusted depending on, e.g., the specific application in which the drive belt 100 will be used. In some embodiments, the thickness of the undercord layer 110 may be in the range of from1.8 to 4.0 mm. As used herein, the term "exterior surface" refers to a surface that will serve as the contact surface of the belt, i.e., a surface that will engage with pulleys or the like. In some embodiments, such engagement is direct engagement (i.e., the exterior surface directly contacts the pulleys) or indirect engagement (i.e., a cover layer or the like is disposed between the external surface of the undercord layer and the pulley).

In some embodiments, the drive belt 100 further includes a backing layer 120, which abuts the backing layer surface 110a of the undercord layer 110. Any backing layer material suitable for use in a drive belt can be used for the backing layer 120. Similarly, the thickness of the backing layer 120 is not limited and may be adjusted based on the desired thickness for the backing layer of the resulting belt. In some embodiments, the backing layer 120 is made from a rubber material. In some embodiments, the backing layer 120 may include one or more of a textile, adhesion rubber, and the like.

The exterior surface 110b of the undercord layer 110 as shown in FIG. 1 has been molded to include a plurality of ridges 115 on the exterior surface side of the drive belt 100. In some embodiments, the use of molding to form ridges 115 means that the drive belt 100 may be considered a molded drive belt. While FIG. 1 shows the formation of ridges 115 in the exterior surface 110b of the undercord layer 110, it should be appreciated that other embodiments of the drive belt described herein may not include ridges 115, in which case the exterior surface 110b may instead have a generally planar shape. The cover layer 130 abutting the exterior surface 110b and described in more detail below, conforms to the shape of the exterior surface 110b, and is therefore also in the shape of the ridges formed on the exterior side of the drive belt 100. As described in greater detail below, the material of the undercord layer may penetrate into the cover layer 130 in some embodiments and depending on the material of the undercord layer and the material of the cover layer 130. In such embodiments, the some or all of exterior surface 110b may at least partially overlap into the cover layer 130.

The undercord layer 110 is a foamed undercord layer 110, meaning the foamed undercord layer 110 includes a plurality of void spaces 111 within the body of the undercord layer 110. As shown in FIG. 1, the void spaces 111 are located throughout the undercord layer 110, including at the backing layer surface 110a and at the exterior surface 110b. The sizes and shapes of the plurality of void spaces 111 are generally not limited and may be uniform or non-uniform throughout the undercord layer 110. The amount of void spaces present in the undercord layer 110 can be measured based on the percentage decrease in the specific gravity of the undercord layer 110 from an unfoamed (i.e., generally solid with no void spaces) undercord layer. In some embodiments, the foamed undercord layer 110 has a 10 to 40% reduction in specific gravity from an unfoamed undercord layer due the amount of void space provided in the foamed undercord layer 110 via the plurality of void spaces 111, such as from 15 to 25%. In one embodiment, the reduction in specific gravity is about 20%. In some embodiments, the specific gravity for the foamed undercord layer 110 is in the range of from about 0.6 to about 1.1 g/cm³, such as from about 0.7 to about 1.1 g/cm³ or from about 0.8 to about 1.0 g/cm³.

In some embodiments, the reduction in specific gravity generally contributes to the drive belt 100 described herein having a reduced bending stiffness. For example, in some embodiments, an unfoamed undercord layer contributes to providing a drive belt having a bending stiffness of about 46 N/mm at 1Hz and about 50 N/mm at 10 Hz, whereas a foamed undercord layer having a reduction in specific gravity of about 43% contributes to providing a drive belt having a bending stiffness of about 31 N/mm at 1 Hz and about 34 N/mm at 10 Hz. Generally speaking, there is a downward trend in bending stiffness as specific gravity is increased.

In some embodiments, the undercord layer 110 is foamed using a chemical foaming agent to create the void spaces 111 within the undercord layer 110 when heat and/or pressure are applied to the stock material of the undercord layer 110 during manufacturing. When heated, the chemical foaming agents decompose to form a gas that then creates void spaces in the base material of the undercord layer 110. Because of this foaming mechanism, the material of the undercord layer 110 directly abuts the void spaces 111 and serves as the immediate boundary of the void spaces 111. This is in contrast to, for example, hollow microspheres, which when included in an undercord layer, provide a barrier between the void space and the material of the undercord layer 110, the barrier being the material of the hollow microsphere.

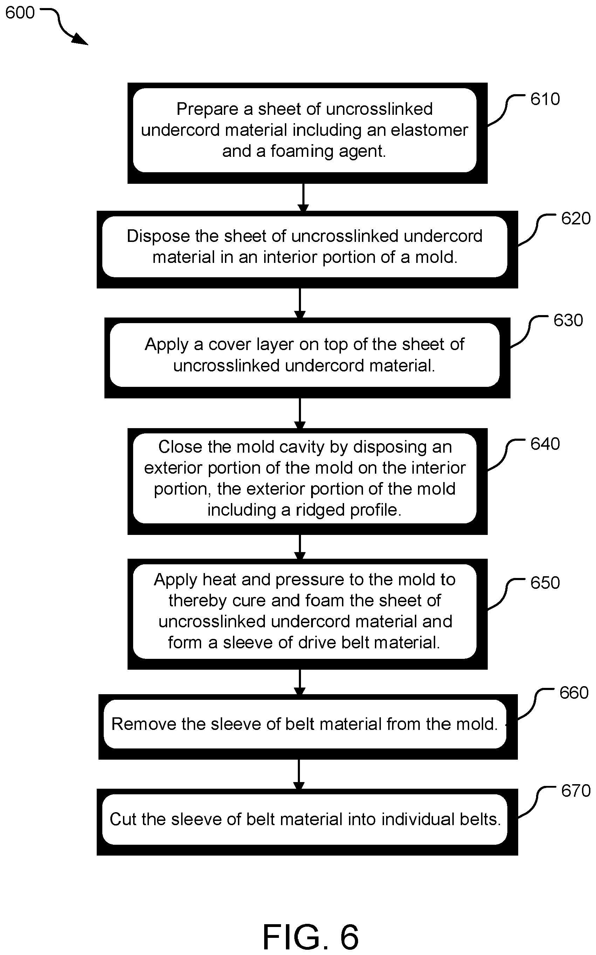

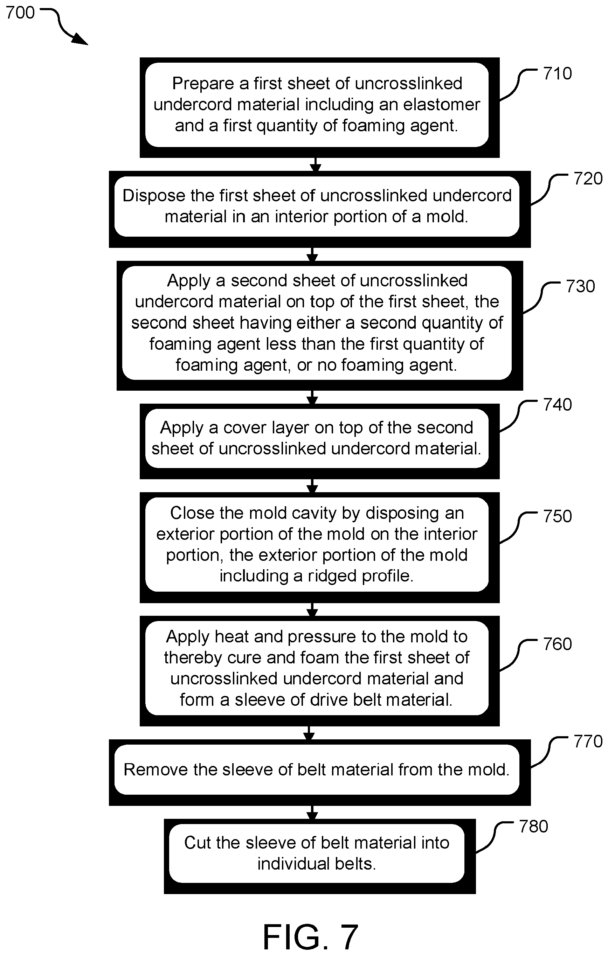

In some embodiments, the undercord layer 110 is comprised primarily of an elastomer material. Any elastomer material suitable for use in a drive belt can be used. Non-limiting examples of the elastomer material include EPDM, chloroprene rubber, SBR, and ethylene-butene, ethylene propylene, or ethylene octene copolymers, as well as TPE, TPU, or TPV elastomers. The elastomer material may also be a blend of two or more elastomers. As noted previously, the initial stock material used in the formation of the foamed undercord layer includes a foaming agent, but the foaming agent decomposes to a gas as part of the foaming process. Additional description of the foaming of the undercord layer and suitable foaming agents is provided below with respect to the discussion of FIG. 6 and FIG. 7.

The drive belt 100 further includes a cover layer 130 formed on the exterior surface 110b of the undercord layer 110. The cover layer 130 generally covers all surface area of the exterior surface 110b and directly abuts the exterior surface 110b. The thickness of the cover layer 130 is generally not limited, and may be selected based on the specific application for the drive belt 100. The material of the cover layer 130 is a knit tube, paper or other types of film. The cover layer 130 generally serves to improve various performance characteristics of the drive belt 100, such as coefficient of friction and MAN performance. When a knit tube is used, the material of the undercord layer will penetrate into and fill void spaces between threads in the knit tube during the curing step (described in greater detail below with respect to FIG. 6 and FIG. 7).

FIG. 1 also shows the drive belt including cords 140 embedded within the undercord layer 110. As shown in FIG. 1, the cords may be located close to or touching the backing layer 120. Cords 140 are oriented generally perpendicular to the axis of rotation of the belt, regardless of the orientation of ridges that may be formed in the exterior surface 110b of the undercord layer 110. The material of the cords 140 included within the undercord layer 110 is generally not limited, and in some embodiments, may include metal, aramid, carbon fiber, nylon, polyester, glass, ceramic and various composite materials, and may include hybrid mixtures of materials. The dimensions of the cord 140 (e.g., diameter) as well as spacing between adjacent lengths of cord are not limited and may be selected based on the desired final application of the belt.

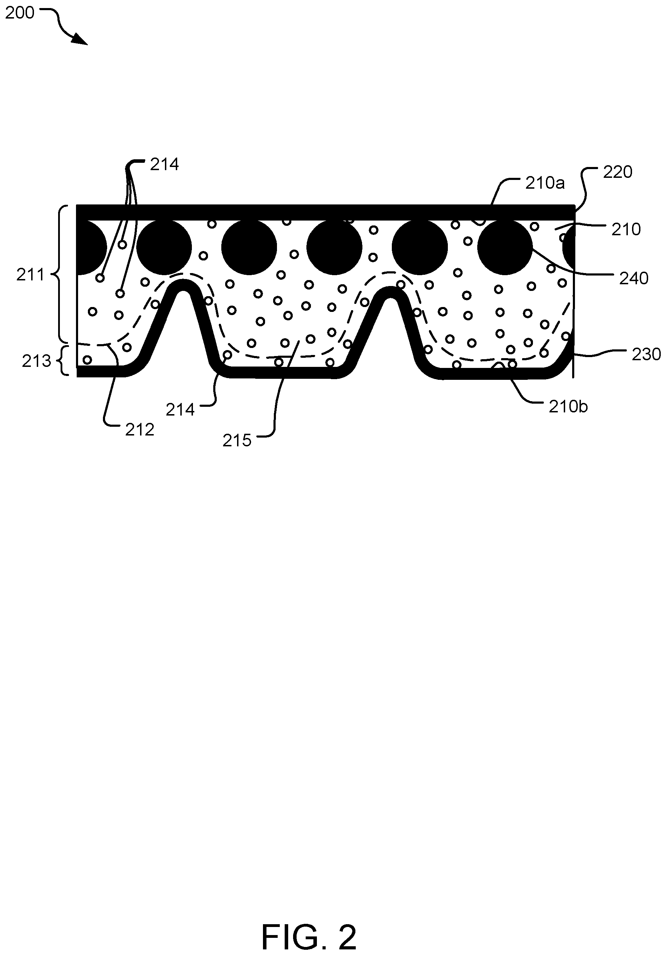

FIG. 2 shows an alternate embodiment of the drive belt 100 shown in FIG. 1, in which the drive belt 200 includes two regions within the undercord layer 210, the two regions differing with respect to the degree of foaming. More specifically, the undercord layer 210 includes a first region 211 that extends from the backing layer surface 210a to a boundary 212 intermediate the backing layer surface 210a and the exterior surface 210b, and a second region 213 that extends from the boundary 212 to the exterior surface 210b. The boundary 212 is an imaginary boundary and can be located at any location between the backing layer surface 210a and the exterior surface 210b. For example, as shown in FIG. 2, the boundary 212 is located proximate the exterior surface 210b. However, the boundary 212 could be halfway between the backing layer surface 210a and the exterior surface 210b, or could be located more proximate the backing layer surface 210a.

As shown in FIG. 2, the first region 211 is foamed and includes a plurality of voids 214 located throughout the first region 211. In some embodiments, the foaming of first region 211 is similar or identical to the foaming shown throughout undercord layer 110 in FIG. 1, such as a first region 211 having a degree of foaming where the specific gravity is about 10-40% less than the specific gravity of an unfoamed first region. As also shown in FIG. 2, the second region 213 is also foamed, but to a lesser extent than the first region 211. For example, the second region may include a plurality of voids 214, but fewer voids on a per volume basis than the plurality of voids 214 included in the first region 212. In some embodiments, the decrease in specific gravity in the second region 213 as compared to a unfoamed second region is less than the 10-40% decrease in specific gravity of the first region 211, such as a decrease of about 5-10% in specific gravity as compared to an unfoamed second region. As discussed in greater detail below, this difference in degree of foaming between the first region 211 and second region 213 may be achieved by using a first sheet of undercord material having a first quantity of foaming agent to form the first region 211 and a second sheet of undercord material having a second quantity of foaming agent less than the first quantity of foaming agent to form the second region 213.

The remaining components of the drive belt 200 shown in FIG. 2 may be similar or identical to the drive belt 100 shown in FIG. 1 and which components are described in greater detail above. For example, the drive belt 200 may include ridges 215 formed in the exterior side of the drive belt 200, and a backing layer 220. The drive belt 200 includes a cover layer 230, and cords 240 embedded within the undercord layer 210 (such as cords close to or contacting the backing layer 220). The drive belt 200 may also be formed using molding techniques to thereby make the drive belt 200 a molded drive belt.

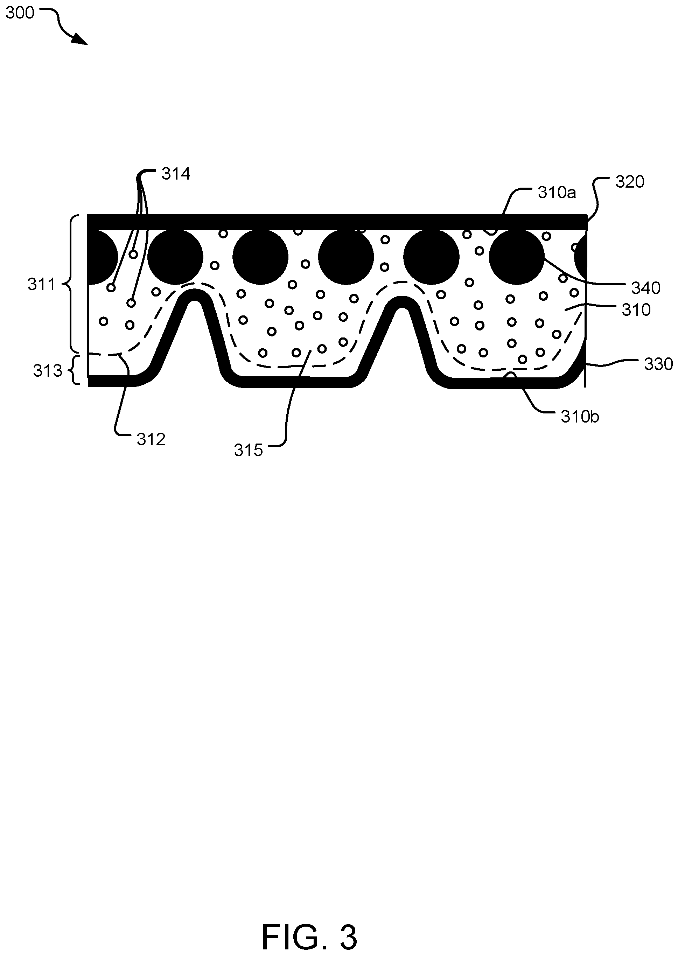

FIG. 3 depicts an alternate embodiment of drive belt 200 shown in FIG. 2, in which the drive belt 300 includes two regions within the undercord layer 310, the first region being foamed and the second region not being foamed. More specifically, the undercord layer 310 includes a first region 311 that extends from the backing layer surface 310a to a boundary 312 intermediate the backing layer surface 310a and the exterior surface 310b and which is foamed, and a second region 313 that extends from the boundary 312 to the exterior surface 310b but which is not foamed.

As with the embodiment shown in FIG. 2, the boundary 312 is an imaginary boundary and can be located at any location between the backing layer surface 310a and the exterior surface 310b. For example, as shown in FIG. 3, the boundary 312 is located proximate the exterior surface 310b. However, the boundary 312 could be exactly halfway between the backing layer surface 310a and the exterior surface 310b, or could be located more proximate the backing layer surface 310a.

As shown in FIG. 3, the first region 311 is foamed and includes a plurality of voids 314 located throughout the first region 311. In some embodiments, the foaming of first region 311 is similar or identical to the foaming shown throughout undercord layer 110 in FIG. 1, such as a first region 311 having a degree of foaming where the specific gravity is about 10-40% less than the specific gravity of an unfoamed first region.

As also shown in FIG. 3, the second region 313 is unfoamed. That is to say, no void spaces are located within the second region 313 such that an area of solid undercord layer is present at the exterior surface of the drive belt 300, the solid area separating the cover layer 330 from the first region 311 of foamed undercord material. As discussed in greater detail below, this difference between the first region 311 and second region 313 may be achieved by using a first sheet of undercord material having a first quantity of foaming agent to form the first region 311 and a second sheet of undercord material having no foaming agent to form the second region 313. Alternatively, the unfoamed second region 313 may be created by using a single sheet of undercord material and incorporating slight vacuuming and/or higher pressure against the mold as discussed in greater detail below. Regardless of the manufacturing technique used to create the configuration shown in FIG. 3 including an unfoamed second region 313, the unfoamed second region 313 can help to mitigate crack propagation in the undercord layer 310 by providing a smoother (e.g., no void spaces) surface at the interface with a cover layer 330.

The remaining components of the drive belt 300 shown in FIG. 3 may be similar or identical to the drive belt 100 shown in FIG. 1 and which components are described in greater detail above. For example, the drive belt 300 may include ridges 315 formed in the exterior side of the drive belt 300, a backing layer 320, a cover layer 330, and cords 340 embedded within the undercord layer 310. The drive belt 300 may also be formed using molding techniques to thereby make the drive belt 300 a molded drive belt.

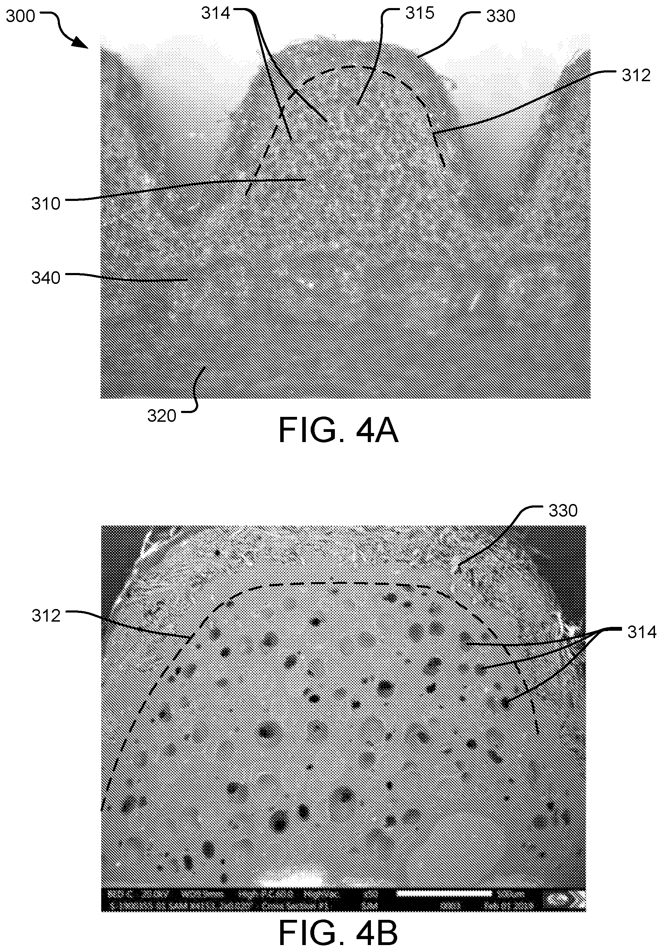

FIG. 4A and 4B are a Keyence microscopic image and SEM image (50x), respectively, of a cross-section of a drive belt 300 constructed in accordance with various embodiments described herein. In the Keyence microscopic image of FIG. 4A, the drive belt 300 is shown including an undercord layer 310, backing layer 320, cover layer 330 and cords 340. The drive belt 300 shown in FIG. 4A also includes ridges 315 formed from molding the exterior side of the drive belt 300. As shown in FIG. 4A, void spaces 314 are formed throughout a first region of the undercord layer 310, i.e., a region closest to the backing layer 310. However, in the second region closest to the cover layer 330, the undercord layer 110 is free of void spaces. The boundary 312 separates the first region (with voids 314) from the second region (without voids). In the SEM (50x) image of FIG. 4B, the void spaces 314 are shown as being located throughout the first region, while the second region is free of voids 314. Again, the boundary 312 separates the two regions and defines where void spaces are present or absent.

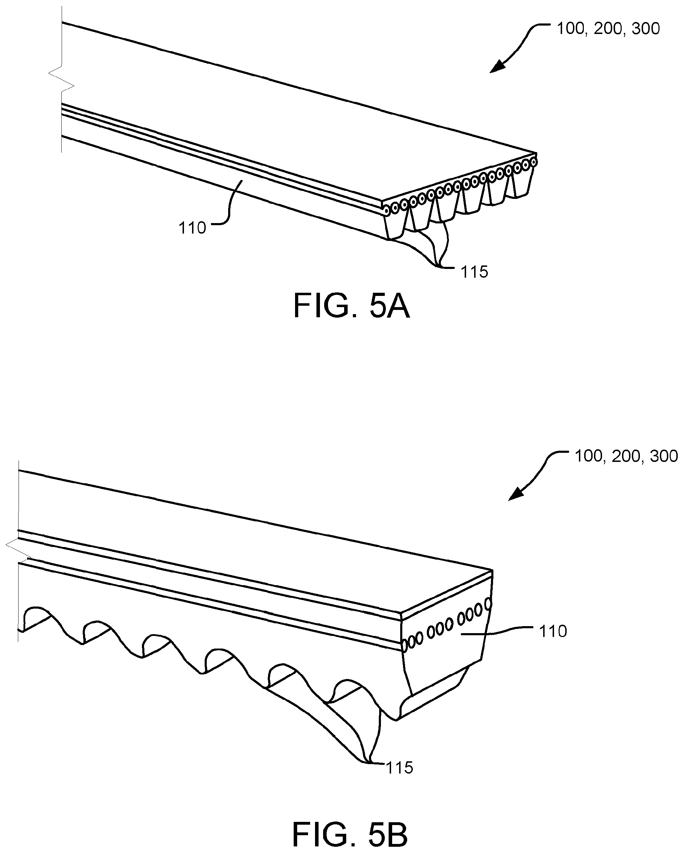

FIG. 5A and FIG. 5B are perspective views of drive belts 100, 200, 300 having different ridge orientations and which can be used with any of the drive belts 100, 200, 300 described herein. In FIG. 5A, the ridges 115 are generally oriented in a direction perpendicular to the axis of rotation of the belt 100. These ridges 115 can also be considered to be aligned in parallel with the length direction of the belts 100. In FIG. 5B, the ridges 115 are generally oriented in a direction parallel to the axis of rotation of the belt 100 (or perpendicular to the length direction of the drive belt 100). The undercord layer 110 can be incorporated into a drive belt having either ridge orientation shown in FIG. 5A and 5B, and can also be incorporated into other types of drive belt, such as drive belts that do not include any type of ridge.

With reference to FIG. 6, a flow chart illustrating an embodiment of a method 600 for manufacturing a drive belt is shown. The method 600 generally relates to method for forming the drive belt 100 shown in FIG. 1 wherein the undercord layer is foamed throughout its thickness. The method 600 generally includes a step 610 of preparing a sheet of uncrosslinked undercord material; a step 620 of disposing the sheet of uncrosslinked undercord material in an interior portion of a mold; a step 630 of applying a cover layer on top of the sheet of uncrosslinked undercord material; a step 640 of closing the mold by disposing an exterior portion of the mold on the interior portion, the exterior portion including a ridged profile to form ridges in cover layer and undercord layer; a step 650 of applying heat and pressure to the mold to cure and foam the sheet of undercord material and form a sleeve of drive belt materials; a step 660 of removing the sleeve of drive belt material from the mandrel; and a step 670 of cutting the sleeve of drive belt material into individual belts.

With respect to step 610, a sheet of uncrosslinked undercord material is prepared using known methods for forming sheets of undercord material. The sheet of uncrosslinked undercord material comprises at least one elastomer and a foaming agent. The elastomer material may be, for example, EPDM, SBR or other types of rubbers, and the uncrosslinked undercord material may include one or more elastomers. The elastomer forms the majority of the sheet of the undercord material, and other components included in the sheet will generally be provided at a PHR (parts per hundred rubber) level.

In addition to the elastomer component, the sheet of undercord material further includes a foaming agent. The foaming agent is included in the sheet of undercord material so that when heat and pressure are applied to the sheet as described in step 650 below, the foaming agent decomposes into a gas, thereby forming void spaces within the sheet of undercord material. In some embodiments, the foaming agent incorporated into the sheet of undercord material is a foaming agent that decomposes at a temperature similar to the temperature at which the sheet of undercord material is cured. The foaming of the sheet of undercord material is improved when the decomposition of the foaming agent occurs at a similar temperature to the curing of the sheet of undercord material. Therefore, in some embodiments, the foaming agent is a foaming agent having a decomposition temperature in the range of from about 125 to 175 deg.C, and more specifically at a decomposition temperature of about 150 deg.C. Exemplary though non-limiting examples of foaming agent that can be included in the sheet of uncrosslinked undercord material include Unicell G^{™} (manufactured by Dongjin Semichem Co., Ltd.) and Celogen OT^{™} (manufactured by CelChem LLC).

The amount of foaming agent included in the sheet of unfoamed undercord material is generally selected such that the foamed and cured undercord material experiences a reduction in specific gravity of about 20% as compared to the specific gravity of the unfoamed undercord material. In some embodiments, foaming agent provided at an amount of from about 2 to 10 phr, such as from 2.5 to 5 phr, achieves the desired reduction in specific gravity.

Other components can also optionally be included in the sheet of uncrosslinked undercord layer. In some embodiments, the sheet of undercord material further includes a curing agent, such as a peroxide. In some embodiments, a lower temperature peroxide is preferred as the curing agent, as the lower temperature peroxide enhances foaming in addition to promoting crosslinking. More specifically, the lower temperature peroxide promotes curing at lower temperatures, which helps keep and lock into the undercord material the void spaces formed from the decomposition of the foaming agent. In some embodiments, DiCup is a suitable lower temperature peroxide for use in the uncrosslinked undercord sheet, DiCup having a lower curing temperature than, for example, VulCup peroxide curing agent. Sulfur curing agents can also be used, as the curing temperature of sulfur curing agents often matches well with decomposition temperatures of foaming agents. The amount of low temperature peroxide included in the uncrosslinked undercord sheet can be, for example, from 5 to 10 phr, such as about 8 phr.

In step 620, the sheet of uncrosslinked undercord material is disposed into the interior portion of a mold used for forming the drive belt. Any suitable mold can be used and any known drive belt molding techniques can be used. In some embodiments, the interior portion of the mold will have a cylindrical shape with a flat, planar surface. The interior portion of the mold generally forms the backing layer surface of the drive belt, and so a planar surface ensures that the backing layer surface of the belt is also planar. The diameter of the interior mold can be selected so that the mold has the same diameter as the belts to be formed in the mold. In order to adjust the thickness of the undercord potion of the drive belt formed in the mold, multiple sheets can be placed in the mold.

While not discussed in detail herein, the step 620 of disposing the sheet of uncrosslinked undercord material into the mold can include additional sub-steps when the belt being formed in method 600 incudes additional components such as a backing layer and internal cords. For example, when the belt includes a backing layer, the backing layer may be disposed in the mold before disposing one or more sheets of undercord material into the mold Similarly, cord material embedded within the final belt product can be placed in the mold at any appropriate time, such as between disposing sheets of undercord material into the mold.

In step 630, a cover layer is disposed over the sheet or sheets of undercord material to ensure that the outermost layer of the material disposed in the mold is the cover layer. This helps to ensure that the drive belt formed by the method 600 includes at the exterior surface a cover layer. The cover layer disposed on sheet or sheets of undercord material can generally be similar or identical to the cover layer described previously with respect to FIGs. 1-3, such as disposing a surface knit tube cover layer over the undercord layers.

In step 640, the mold is closed by disposing an exterior portion of the mold on the interior portion. The exterior portion generally will include a profile on its interior side (i.e., the side facing the interior portion of the mold) so that cover layer and sheet or sheets of undercord layer will be molded to adopt the profile of the interior side of the exterior portion of the mold. Generally speaking, the profile of the exterior portion of the mold will be one that molds ridges into the cover layer and undercord material of the drive belt. As discussed in greater detail previously, the specific orientation of the ridges is not limited. In some embodiments, the exterior portion of the mold will form ridges that are aligned perpendicular to the axis of rotation of the belt, while in other embodiments, the profile will mold ridges aligned in parallel with the axis of rotation of the belt into the cover layer and undercord layer. The specific size and shape of the ridges included on the interior surface of the exterior portion of the mold can be varied based on the desired dimensions of the ridges to be molded into the belt

Step 650 generally includes applying heat and/or pressure to the mold. The application of heat and pressure is designed to both cure the uncrosslinked undercord sheets and decompose the foaming agent so as to foam the undercord material. The curing and foaming can generally occur concurrently during step 650. As discussed previously, the foaming agent included in the sheet of material can be specifically selected so as to have a decomposition temperature that is similar to the temperature used for the curing step so that the curing and foaming occurs concurrently. While any suitable combination of temperature and pressure can be selected provided it leads to curing and foaming, in some embodiments, the mold is subjected to temperatures in the range of from about 150 deg.C to 200 deg.C.

As noted above, step 650 results in both curing and foaming of the undercord material disposed in the mold. With respect to the foaming, the foaming agent decomposes into a gas to thereby form a plurality of void spaces within the undercord material. In some embodiments, the sheet of undercord material is prepared such that the foaming agent is located throughout the sheet so that when foaming occurs, void spaces are formed throughout the entirety of the sheet of undercord material, and more specifically from the backing layer surface to the exterior surface. The pressure and heat applied to the mold also ensures that the belt material loaded in the mold takes on and retains the shape of the mold, including the ridges formed in the cover layer and undercord material based on the profile of the exterior portion of the mold.

As a result of step 650, the uncrosslinked undercord material is converted to a sleeve of cured and foamed drive belt material. The sleeve of drive belt material has sufficient structural integrity that it can be removed from the mold in step 660 while retaining the cylindrical form of the mold, including the ridges formed therein. Once removed, the sleeve of drive belt is cut along its axial length in step 670 to form a plurality of individual belts. The number of individual belts formed from the sleeve may generally depend on the overall length of the sleeve and the desired width of the individual belts. In some embodiments, the belts are then inverted so that the profiled side of the belt faces radially inwardly.

While method 600 describes an embodiment wherein the interior portion of the mold is planar and the exterior portion of the mold is profiled, alternate embodiments may provide an interior portion that is profiled and an exterior portion that is planar. In such embodiments, the sequence of adding layers of material may need to be reversed. For example, when the interior portion of the mold is profiled, the first layer disposed in the mold should be the cover layer, followed by undercord material and then a backing layer.

With reference to FIG. 7, a flow chart illustrating an embodiment of a method 700 for manufacturing a drive belt is shown. The method 700 generally relates to methods for forming the drive belt 200 or 300 shown in FIG. 2 or 3. The method 700 generally includes a step 710 of preparing a first sheet of uncrosslinked undercord material; a step 720 of disposing the first sheet of uncrosslinked undercord material in an interior portion of a mold; a step 730 of disposing a second sheet of uncrosslinked undercord material on top of the first sheet; a step 740 of applying a cover layer on top of the second sheet of uncrosslinked undercord material; a step 750 of closing the mold by disposing an exterior portion of the mold on the interior portion, the exterior portion including a ridged profile to form ridges in the cover layer and undercord layers; a step 760 of applying heat and pressure to the mold to cure and foam the first sheet of undercord material and form a sleeve of drive belt material; a step 770 of removing the sleeve of drive belt material from the mold; and a step 780 of cutting the sleeve of drive belt material into individual belts.

Step 710 is generally similar to step 610 described previously. The first sheet of uncured undercord material includes an elastomer and a first quantity of foaming agent, such as foaming agent in an amount of about 2-10 phr, and in some preferred embodiments, from 2.5 to 5 phr. Step 720 is generally similar or identical to step 620, wherein one or more sheets of the first sheet of undercord material is disposed in an interior portion of a mold, the interior portion having a planar surface.

In step 730, a second sheet of uncured undercord material is disposed on top of the first sheet of material. While the second sheet of material includes an elastomer that may be the same as or similar to the elastomer included in the first sheet of material, the second sheet of material differs from the first sheet of material in that the second sheet of material either includes less foaming agent than is present in the first sheet of material, or includes no foaming agent. When the second sheet of material includes less foaming agent than is present in the first sheet of material, the resulting drive belt will be similar to the drive belt shown in FIG. 2 wherein the first region of the undercord layer is foamed and the second region of the undercord layer is foamed but to a lesser extent than the first region. When the second sheet of material includes no foaming agent, the resulting drive belt will be similar to the drive belt shown in FIG. 3 wherein the first region of the undercord layer is foamed and the second region of the undercord layer is not foamed.

When the second sheet of material includes some foaming agent but less than is present in the first sheet of material, the second sheet of material can include any amount of foaming agent provided it is below the amount of foaming agent in the first sheet of material. For example, if the first sheet of material includes foaming agent at an amount of about 2.5 phr, the second sheet may include foaming agent in an amount of about 1 phr.

Once the second sheet of material having a differing amount of foaming agent than the first sheet of material (including no foaming agent) is disposed in the mold on top of the first sheet of material, the remainder of method 700 generally proceeds in a manner similar or identical to the latter steps of method 600. In step 750, the mold cavity is closed by disposing the exterior portion of the mold on the interior portion. As described previously with respect to step 640, the exterior portion of the mold can include a profile to mold ridges into the belt.

In step 760, heat and pressure is applied to the mold in a similar or identical fashion as described previously with respect to step 650. However, while in step 650 the application of heat and pressure to the mold resulted in all of the undercord material being foamed and cured, the application of heat and pressure in step 760 will cure the first and second undercord material layers, but will only foam both layers when foaming agent is included in both layers. Furthermore, when both layers include foaming agent, the extent of foaming in the second layer will be less than the foaming in the first layer by virtue of the second layer including less foaming agent than in the first layer. In embodiments where the second layer includes no foaming agent, then step 760 will result in the first layer foaming and curing, while the second layer only cures.

Steps 770 and 780 are similar or identical to steps 660 and 670, respectively, with step 770 involving removing the cured and selectively foamed sleeve of foamed material being removed, and step 780 involving cutting the sleeve into individual belts. The individually cut belts may be inverted in order to have the profiled side of the belt (i.e., the ridged side of the belt) facing radially inwardly.

While method 700 describes an embodiment wherein the interior portion of the mold is planar and the exterior portion of the mold is profiled, alternate embodiments may provide an interior portion that is profiled and an exterior portion that is planar. In such embodiments, the sequence of adding layers of material may need to be reversed. For example, when the interior portion of the mold is profiled, the first layer disposed in the mold should be the cover layer, followed by the second sheet of undercord material, then the first sheet of undercord material, and then a backing layer.

In another embodiment not shown in the figures, a minor modification to the method illustrated in FIG. 6 and described in greater detail above can be used to form the drive belt 300 shown in FIG. 3. More specifically, the method of FIG. 6 is carried out as described above, but minor modifications, such as incorporating slight vacuuming and/or high pressure against the mold, can be used in order to form a second region proximate the exterior surface without foaming. Formation of this unfoamed region proximate the exterior surface is possible even without using a first sheet of undercord material with foaming agent and a second sheet of undercord material without foaming agent as described with respect to FIG. 7. In such an embodiment, the method generally progresses as described above with respect to FIG. 6, wherein a single sheet of undercord material having foaming agent incorporated therein is provided and inserted into the mold. However, during the molding phase, slight vacuuming and/or higher pressure against the mold is used such that the foaming only occurs in the sheet of material at a location away from the exterior mold. In this manner, the belt formed includes the two regions described above with respect to FIG. 3, wherein a first region proximate the backing layer is foamed, but a second region proximate the cover layer is unfoamed.

From the foregoing, it will be appreciated that specific embodiments of the invention have been described herein for purposes of illustration, but that various modifications may be made without deviating from the scope of the invention. Accordingly, the invention is not limited except as by the appended claims.

## Claims

1. A drive belt (100; 200) comprising:
a foamed undercord layer (110; 210) having a thickness extending from a backing layer surface (110a; 210a) of the foamed undercord layer (110; 210) to an exterior surface (110b; 210b) of the foamed undercord layer (110; 210) opposite the backing layer surface (110a; 210a), wherein the foamed undercord layer (110; 210) is foamed throughout the entire thickness of the foamed undercord layer (110; 210);
a plurality of void spaces (111; 214) located throughout the thickness of the foamed undercord layer (110; 210), the plurality of voids (111; 214) being present throughout the thickness of the foamed undercord layer (110; 210) as a result of the foamed undercord layer (110; 210) being foamed;
a cover layer (130; 230) formed over and abutting the exterior surface of the foamed undercord layer (110; 210), the material of the cover layer (130; 230) being a knit tube, paper or other type of film; and
a plurality of cords (140; 240) the plurality of cords (140; 240) being aligned perpendicular to the axis of rotation of the drive belt (100,200), **characterized in that** the plurality of cords are embedded within the foamed undercord layer (110,210).

2. The drive belt (100; 200) of claim 1, wherein the exterior surface of the foamed undercord layer (110; 210) is in the shape of a plurality of ridges (115; 215) and the cover layer (130; 230) conforms to the plurality of ridges (115; 215).

3. The drive belt (100; 200) of claim 1, wherein the material of the cover layer (130; 230) is a knit tube and the material of the undercord layer (110; 210) penetrates into and fills void spaces between threads in the knit tube.

4. The drive belt (100; 200) of claim 1 or 2, wherein:
the undercord layer (110; 210) includes a first region (211) extending from the backing layer surface (210a) to a boundary (212) located intermediate the backing layer surface (210a) and the exterior surface (210b), and a second region (213) extending from the boundary (212) to the exterior surface (210b);
wherein the first and second regions (211, 213) are foamed to thereby include the plurality of void spaces located throughout the first and second regions (211, 213); and
wherein the second region (213) is foamed to a lesser degree than the first region (211).

5. The drive belt (200) of claim 4, wherein the exterior surface (210b) of the undercord layer (210) is in the shape of a plurality of ridges (215).

6. The drive belt (100; 200) of claim 1 or 4, wherein the material of the undercord layer (110; 210) directly abuts the plurality of void spaces (111).

7. The drive belt (100; 200) of claim 2or 5, wherein the plurality of ridges (115; 215) are aligned in parallel to or perpendicular to the axis of rotation of the drive belt.

8. The drive belt (100; 200) of claim 1 or 2, further comprising:
a backing layer (120; 220), the backing layer (120; 220) abutting the backing layer surface (110a; 210a) of the foamed undercord layer (110; 210).

9. The drive belt (100; 200) of claim 1 or 4 when dependent on claim 2, wherein the undercord layer (110; 210) comprises an elastomer.

10. The drive belt (100; 200) of claim 1 or 4 when dependent on claim 2, wherein the specific gravity of the undercord layer (110; 210) is in the range of from 0.6 to 1.1 g/cm³, more preferably in the range of from 0.8 to 1.0 g/cm³.

11. The drive belt (110; 210) of claim 1 or 4 when dependent on claim 2, wherein the drive belt is a molded drive belt.

12. A method (600; 700) of manufacturing a drive belt (110; 210), comprising:
preparing (610) a first sheet of uncrosslinked undercord material, the first sheet of uncrosslinked undercord material comprising an elastomer and a first quantity of foaming agent;
disposing cord material in the interior portion of the mold
disposing (620; 730) the first sheet of uncrosslinked undercord material in the interior portion of the mold;
applying (630; 740) a cover layer directly on top of the sheet of uncrosslinked undercord material, the material of the cover layer being a knit tube, paper or other type of film;
closing (640; 750) the mold cavity by disposing an exterior portion of the mold on the interior portion, wherein the exterior portion of the mold includes a profile to form a plurality of ridges in the cover layer and sheet of uncrosslinked undercord material;
applying (650; 760) heat and pressure to the mold to thereby cure and foam the sheet of uncrosslinked undercord material and form a sleeve of drive belt material with the cord material embedded in the foamed undercord material, the foaming resulting in the creation of a plurality of void spaces throughout the thickness of the sleeve of belt material;
removing (660; 770) the sleeve of belt material from the mold; and
cutting an individual drive belt off the sleeve of belt material so that the cord material forms a plurality of cords aligned perpendicular to an axis of rotation of the drive belt.

13. The method (700) of manufacturing a drive belt according to claim 12, further comprising:
disposing (720) a second sheet of uncrosslinked undercord material in the interior portion of the mold prior to disposing (730) the first sheet of uncrosslinked undercord material in the interior portion of the mold, the second sheet of uncrosslinked undercord material comprising an elastomer and a second quantity of foaming agent greater than the first quantity of foaming agent;
wherein the profile of the exterior portion of the mold forms the plurality of ridges in the cover layer and the first and second sheets of uncrosslinked undercord material;
wherein the step of applying (760) heat and pressure to the mold thereby cures and foams the first and second sheets of uncrosslinked undercord material, the foaming resulting in the creation of a plurality of void spaces throughout the thickness of the first and second sheets of undercord material, the second sheet being foamed to a greater extent than the first sheet.

14. The method of claim 12 or 13, wherein the foaming agent has a decomposition temperature in the range of from 125 deg.C and 175 deg.C

15. The method of claim 12 or 13, wherein the first quantity of foaming agent is about 5.0 phr.

16. The method of claim 12 or 13, wherein the plurality of ridges formed in the cover layer and the or each sheet of uncrosslinked undercord material are aligned parallel to or perpendicular to the axis of rotation of the individual belts.

17. The drive belt of claim 1 or 4, wherein the specific gravity of the undercord layer is reduced by 10 to 40 % as compared to an unfoamed undercord layer, and the bending stiffness of the drive belt decreases as the reduction in specific gravity of the foamed undercord layer is increased.

## Patentansprüche

1. Antriebsriemen (100; 200), der Folgendes umfasst:
eine geschäumte Unterkordschicht (110; 210) mit einer Dicke, die sich von einer Trägerschichtoberfläche (110a; 210a) der geschäumten Unterkordschicht (110; 210) aus zu einer Außenfläche (110b; 210b) der geschäumten Unterkordschicht (110; 210) entgegengesetzt der Trägerschichtoberfläche (110a; 210a) erstreckt, wobei die geschäumte Unterkordschicht (110; 210) über die gesamte Dicke der geschäumten Unterkordschicht (110; 210) geschäumt ist;
eine Vielzahl von Hohlräumen (111; 214), die über die gesamte Dicke der geschäumten Unterkordschicht (110; 210) hinweg lokalisiert sind, wobei die Vielzahl von Hohlräumen (111; 214) über die gesamte Dicke der geschäumten Unterkordschicht (110; 210) hinweg vorhanden sind als Ergebnis davon, dass die geschäumte Unterkordschicht (110; 210) geschäumt ist;
eine Deckschicht (130; 230), die über der Außenfläche der geschäumten Unterkordschicht (110; 210) ausgebildet ist und an diese angrenzt, wobei das Material der Deckschicht (130; 230) ein Strickschlauch, Papier oder eine andere Art von Film ist; und
eine Vielzahl von Korden (140; 240), wobei die Vielzahl von Korden (140; 240) senkrecht zu der Drehachse des Antriebsriemens (100, 200) ausgerichtet ist, **dadurch gekennzeichnet, dass** die Vielzahl von Korden innerhalb der geschäumten Unterkordschicht (110, 210) eingebettet ist.

2. Antriebsriemen (100; 200) nach Anspruch 1, wobei die Außenfläche der geschäumten Unterkordschicht (110; 210) die Form einer Vielzahl von Rippen (115; 215) aufweist und die Deckschicht (130; 230) der Vielzahl von Rippen (115; 215) entspricht.

3. Antriebsriemen (100; 200) nach Anspruch 1, wobei das Material der Deckschicht (130; 230) ein Strickschlauch ist und das Material der Unterkordschicht (110; 210) in Hohlräume zwischen Fäden in dem Strickschlauch eindringt und diese füllt.

4. Antriebsriemen (100; 200) nach Anspruch 1 oder 2, wobei:
die Unterkordschicht (110; 210) eine erste Region (211), die sich von der Trägerschichtoberfläche (210a) zu einer Grenze (212) erstreckt, die sich intermediär zwischen der Trägerschichtoberfläche (210a) und der Außenfläche (210b) befindet, und eine zweite Region (213), die sich von der Grenze (212) zu der Außenfläche (210b) erstreckt, beinhaltet;
wobei die erste und die zweite Region (211, 213) geschäumt sind, um dadurch die Vielzahl von Hohlräumen zu beinhalten, die sich überall in der ersten und zweiten Region (211, 213) befinden; und
wobei die zweite Region (213) zu einem geringeren Ausmaß geschäumt ist als die erste Region (211).

5. Antriebsriemen (200) nach Anspruch 4, wobei die Außenfläche (210b) der Unterkordschicht (210) die Form einer Vielzahl von Rippen (215) aufweist.

6. Antriebsriemen (100; 200) nach Anspruch 1 oder 4, wobei das Material der Unterkordschicht (110; 210) direkt an die Vielzahl von Hohlräumen (111) angrenzt.

7. Antriebsriemen (100; 200) nach Anspruch 2 oder 5, wobei die Vielzahl von Rippen (115; 215) parallel oder senkrecht zur Drehachse des Antriebsriemens ausgerichtet ist.

8. Antriebsriemen (100; 200) nach Anspruch 1 oder 2, der ferner Folgendes umfasst:
eine Trägerschicht (120; 220), wobei die Trägerschicht (120; 220) an der Trägerschichtoberfläche (110a; 210a) der geschäumten Unterkordschicht (110; 210) anliegt.

9. Antriebsriemen (100; 200) nach Anspruch 1 oder 4, wenn abhängig von Anspruch 2, wobei die Unterkordschicht (110; 210) ein Elastomer umfasst.

10. Antriebsriemen (100; 200) nach Anspruch 1 oder 4, wenn abhängig von Anspruch 2, wobei das spezifische Gewicht der Unterkordschicht (110; 210) im Bereich von 0,6 bis 1,1 g/cm³, bevorzugter im Bereich von 0,8 bis 1,0 g/cm³ liegt.

11. Antriebsriemen (110; 210) nach Anspruch 1 oder 4, wenn abhängig von Anspruch 2, wobei der Antriebsriemen ein geformter Antriebsriemen ist.

12. Verfahren (600; 700) zum Herstellen eines Antriebsriemens (110; 210), umfassend:
Herstellen (610) einer ersten Lage aus unvernetztem Unterkordmaterial, wobei die erste Lage aus unvernetztem Unterkordmaterial ein Elastomer und eine erste Menge Schäumungsmittel umfasst;
Anordnen von Kordmaterial im inneren Abschnitt der Form, Anordnen (620; 730) der ersten Lage aus unvernetztem Unterkordmaterial im inneren Abschnitt der Form;
Aufbringen (630; 740) einer Deckschicht direkt auf die Lage aus unvernetztem Unterkordmaterial, wobei das Material der Deckschicht ein Strickschlauch, Papier oder eine andere Art von Film ist;
Schließen (640; 750) des Formhohlraums durch Anordnen eines äußeren Abschnitts der Form auf dem inneren Abschnitt, wobei der äußere Abschnitt der Form ein Profil zum Bilden einer Vielzahl von Rippen in der Deckschicht und der Lage aus unvernetztem Unterkordmaterial beinhaltet;
Anwenden (650; 760) von Wärme und Druck auf die Form, um dadurch die Lage aus unvernetztem Unterkordmaterial zu härten und zu schäumen und eine Hülse aus Antriebsriemenmaterial zu bilden, wobei das Kordmaterial in das geschäumte Unterkordmaterial eingebettet ist, wobei das Schäumen zur Erzeugung einer Vielzahl von Hohlräumen über die gesamte Dicke der Riemenmaterialhülse hinweg führt;
Entfernen (660; 770) der Riemenmaterialhülse aus der Form; und
Ausschneiden eines einzelnen Antriebsriemens aus der Riemenmaterialhülse, so dass das Kordmaterial eine Vielzahl von Korden bildet, die senkrecht zu einer Drehachse des Antriebsriemens ausgerichtet sind.

13. Verfahren (700) zum Herstellen eines Antriebsriemens nach Anspruch 12, das ferner Folgendes umfasst:
Anordnen (720) einer zweiten Lage von unvernetztem Unterkordmaterial im inneren Abschnitt der Form vor dem Anordnen (730) der ersten Lage aus unvernetztem Unterkordmaterial im inneren Abschnitt der Form, wobei die zweite Lage von unvernetztem Unterkordmaterial ein Elastomer und eine zweite Menge Schäumungsmittel umfasst, die größer als die erste Menge Schäumungsmittel ist;
wobei das Profil des äußeren Abschnitts der Form die Vielzahl von Rippen in der Deckschicht und die erste und die zweite Lage aus unvernetztem Unterkordmaterial formt;
wobei der Schritt des Anwendens (760) von Wärme und Druck auf die Form dadurch die erste und die zweite Lage von unvernetztem Unterkordmaterial aushärtet und schäumt, wobei das Schäumen zur Erzeugung einer Vielzahl von Hohlräumen über die gesamte Dicke der ersten und der zweiten Lagen aus Unterkordmaterial hinweg führt, wobei die zweite Lage in einem größeren Ausmaß als die erste Lage geschäumt wird.

14. Verfahren nach Anspruch 12 oder 13, wobei das Schäumungsmittel eine Zersetzungstemperatur im Bereich von 125 °C bis 175 °C aufweist

15. Verfahren nach Anspruch 12 oder 13, wobei die erste Menge an Schäumungsmittel etwa 5,0 phr beträgt.

16. Verfahren nach Anspruch 12 oder 13, wobei die Vielzahl von Rippen, die in der Deckschicht gebildet sind, und die oder jede Lage aus unvernetztem Unterkordmaterial parallel oder senkrecht zur Drehachse der einzelnen Riemen ausgerichtet sind.

17. Antriebsriemen nach Anspruch 1 oder 4, wobei das spezifische Gewicht der Unterkordschicht im Vergleich zu einer ungeschäumten Unterkordschicht um 10 bis 40 % reduziert ist und die Biegesteifigkeit des Antriebsriemens mit zunehmender Verringerung des spezifischen Gewichts der geschäumten Unterkordschicht abnimmt.

## Revendications

1. Courroie de transmission (100 ; 200) comprenant :
une couche de compression expansée (110 ; 210) ayant une épaisseur s'étendant depuis une surface côté couche de support (110a ; 210a) de la couche de compression expansée (110 ; 210) jusqu'à une surface extérieure (110b ; 210b) de la couche de compression expansée (110 ; 210) à l'opposé de la surface côté couche de support (110a ; 210a), la couche de compression expansée (110 ; 210) étant expansée sur toute l'épaisseur de la couche de compression expansée (110 ; 210) ;
une pluralité d'espaces vides (111 ; 214) situés sur toute l'épaisseur de la couche de compression expansée (110 ; 210), la pluralité d'espaces vides (111 ; 214) étant présents sur toute l'épaisseur de la couche de compression expansée (110 ; 210) en conséquence de l'expansion de la couche de compression expansée (110 ; 210) ;
une couche de revêtement (130 ; 230) formée sur la surface extérieure de la couche de compression expansée (110 ; 210) et jouxtant celle-ci, le matériau de la couche de revêtement (130 ; 230) étant un tube tricoté, du papier ou un autre type de film ; et
une pluralité de câbles (140 ; 240), la pluralité de câbles (140 ; 240) étant alignés perpendiculairement à l'axe de rotation de la courroie de transmission (100 ; 200), **caractérisée en ce que** la pluralité de câbles sont noyés dans la couche de compression expansée (110 ; 210).

2. Courroie de transmission (100 ; 200) de la revendication 1, dans laquelle la surface extérieure de la couche de compression expansée (110 ; 210) prend la forme d'une pluralité de nervures (115 ; 215) et la couche de revêtement (130 ; 230) épouse la forme de la pluralité de nervures (115 ; 215).

3. Courroie de transmission (100 ; 200) de la revendication 1, dans laquelle le matériau de la couche de revêtement (130 ; 230) est un tube tricoté et le matériau de la couche de compression (110 ; 210) pénètre à l'intérieur des espaces vides entre les fils du tube tricoté et les remplit.

4. Courroie de transmission (100 ; 200) de la revendication 1 ou 2, dans laquelle :
la couche de compression (110 ; 210) comporte une première région (211) s'étendant de la surface côté couche de support (210a) à une limite (212) située entre la surface côté couche de support (210a) et la surface extérieure (210b), et une deuxième région (213) s'étendant de la limite (212) à la surface extérieure (210b) ;
dans laquelle les première et deuxième régions (211, 213) sont expansées pour englober ainsi la pluralité d'espaces vides situés partout dans les première et deuxième régions (211, 213) ; et
dans laquelle la deuxième région (213) est expansée à un degré inférieur à celui de la première région (211).

5. Courroie de transmission (200) de la revendication 4, dans laquelle la surface extérieure (210b) de la couche de compression (210) prend la forme d'une pluralité de nervures (215).

6. Courroie de transmission (100 ; 200) de la revendication 1 ou 4, dans laquelle le matériau de la couche de compression (110 ; 210) jouxte directement la pluralité d'espaces vides (111).

7. Courroie de transmission (100 ; 200) de la revendication 2 ou 5, la pluralité de nervures (115 ; 215) étant alignées parallèlement ou perpendiculairement à l'axe de rotation de la courroie de transmission.

8. Courroie de transmission (100 ; 200) de la revendication 1 ou 2, comprenant en outre :
une couche de support (120 ; 220), la couche de support (120 ; 220) jouxtant la surface côté couche de support (110a ; 210a) de la couche de compression expansée (110 ; 210).

9. Courroie de transmission (100 ; 200) de la revendication 1 ou 4 lorsqu'elle est dépendante de la revendication 2, dans laquelle la couche de compression (110 ; 210) comprend un élastomère.

10. Courroie de transmission (100 ; 200) de la revendication 1 ou 4 lorsqu'elle est dépendante de la revendication 2, dans laquelle la masse volumique de la couche de compression (110 ; 210) est comprise entre 0,6 et 1,1 g/cm³, mieux encore entre 0,8 et 1,0 g/cm³.

11. Courroie de transmission (110 ; 210) de la revendication 1 ou 4 lorsqu'elle est dépendante de la revendication 2, la courroie de transmission étant une courroie de transmission moulée.

12. Procédé (600 ; 700) de fabrication d'une courroie de transmission (110 ; 210), comprenant :
la préparation (610) d'une première feuille de matériau de compression non réticulé, la première feuille de matériau de compression non réticulé comprenant un élastomère et une première quantité d'agent d'expansion ;
la mise en place d'un matériau de câble dans la partie intérieure du moule ;
la mise en place (620 ; 730) de la première feuille de matériau de compression non réticulé dans la partie intérieure du moule ;
l'application (630 ; 740) d'une couche de revêtement directement sur la feuille de matériau de compression non réticulé, le matériau de la couche de revêtement étant un tube tricoté, du papier ou un autre type de film ;
la fermeture (640 ; 750) de la cavité du moule par mise en place d'une partie extérieure du moule sur la partie intérieure, la partie extérieure du moule présentant un profil permettant de former une pluralité de nervures dans la couche de revêtement et la feuille de matériau de compression non réticulé ;
l'application (650 ; 760) de chaleur et de pression au moule pour ainsi durcir et expanser la feuille de matériau de compression non réticulé et former un manchon de matériau de courroie de transmission avec le matériau de câble noyé dans le matériau de compression expansé, l'expansion se soldant par la création d'une pluralité d'espaces vides sur toute l'épaisseur du manchon de matériau de courroie ;
le retrait (660 ; 770) du manchon de matériau de courroie du moule ; et
la découpe d'une courroie de transmission individuelle dans le manchon de matériau de courroie de telle sorte que le matériau de câble forme une pluralité de câbles alignés perpendiculairement à un axe de rotation de la courroie de transmission.

13. Procédé (700) de fabrication d'une courroie de transmission selon la revendication 12, comprenant en outre :
la mise en place (720) d'une deuxième feuille de matériau de compression non réticulé dans la partie intérieure du moule avant la mise en place (730) de la première feuille de matériau de compression non réticulé dans la partie intérieure du moule, la deuxième feuille de matériau de compression non réticulé comprenant un élastomère et une deuxième quantité d'agent d'expansion supérieure à la première quantité d'agent d'expansion ;
dans lequel le profil de la partie extérieure du moule forme la pluralité de nervures dans la couche de revêtement et les première et deuxième feuilles de matériau de compression non réticulé ;
dans lequel l'étape d'application (760) de chaleur et de pression au moule durcit et expanse ainsi les première et deuxième feuilles de matériau de compression non réticulé, l'expansion se soldant par la création d'une pluralité d'espaces vides sur toute l'épaisseur des première et deuxième feuilles de matériau de compression, la deuxième feuille étant expansée à un degré supérieur à celui de la première feuille.

14. Procédé de la revendication 12 ou 13, dans lequel l'agent d'expansion a une température de décomposition comprise entre 125 °C et 175 °C.

15. Procédé de la revendication 12 ou 13, dans lequel la première quantité d'agent d'expansion est d'environ 5,0 phr.

16. Procédé de la revendication 12 ou 13, dans lequel la pluralité de nervures formées dans la couche de revêtement et la ou chaque feuille de matériau de compression non réticulé sont alignées parallèlement ou perpendiculairement à l'axe de rotation des courroies individuelles.

17. Courroie de transmission de la revendication 1 ou 4, la masse volumique de la couche de compression étant réduite de 10 à 40 % par rapport à une couche de compression non expansée, et la rigidité en flexion de la courroie de transmission diminuant lorsque la réduction de masse volumique de la couche de compression expansée est accrue.
